(19) **Europäisches Patentamt / European Patent Office / Office européen des brevets**

(11) **EP 4 246 442 B1**

(12) # EUROPEAN PATENT SPECIFICATION

(45) Date of publication and mention
of the grant of the patent:
**06.05.2026 Bulletin 2026/19**

(21) Application number: **22749236.0**

(22) Date of filing: **07.02.2022**

(51) International Patent Classification (IPC):
**G06T 9/00** (2006.01)    **H04N 19/85** (2014.01)
**H04N 19/597** (2014.01)    **G06T 9/40** (2006.01)
**H04N 19/70** (2014.01)

(52) Cooperative Patent Classification (CPC):
**G06T 9/001; G06T 9/004; G06T 9/40;**
**H04N 19/597; H04N 19/85;** G06T 2210/56;
H04N 19/70

(86) International application number:
**PCT/CN2022/075379**

(87) International publication number:
**WO 2022/166957 (11.08.2022 Gazette 2022/32)**

(54) **POINT CLOUD GEOMETRY CODING METHOD AND DEVICE USING POINT CLOUD DATA PREPROCESSING**

VERFAHREN UND VORRICHTUNG ZUR CODIERUNG DER PUNKTWOLKENGEOMETRIE UNTER VERWENDUNG EINER VORVERARBEITUNG VON PUNKTWOLKENDATEN

PROCÉDÉ ET DISPOSITIF DE CODAGE DE GÉOMÉTRIE DE NUAGE DE POINTS UTILISANT UN PRÉTRAITEMENT DE DONNÉES DE NUAGE DE POINTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2021 CN 202110180985**

(43) Date of publication of application:
**20.09.2023 Bulletin 2023/38**

(60) Divisional application:
**26169496.2**

(73) Proprietor: **Honor Device Co., Ltd.**
**Shenzhen, Guangdong 518040 (CN)**

(72) Inventors:
• **YANG, Fuzheng**
**Xi'an, Shaanxi 710071 (CN)**
• **ZHANG, Wei**
**Xi'an, Shaanxi 710071 (CN)**

(74) Representative: **Beder, Jens**
**Mitscherlich PartmbB**
**Karlstraße 7**
**80333 München (DE)**

(56) References cited:
**WO-A1-2020/189943**    **WO-A1-2022/075786**
**CN-A- 108 632 607**    **CN-A- 109 214 982**
**US-A1- 2023 388 557**

• **HYUN-MOOK OH ET AL: "[G-PCC] [new proposal] Coordinate conversion for attribute coding of cat3-frame data", no. m53613, 15 April 2020 (2020-04-15), XP030287260, Retrieved from the Internet <URL:http://phenix.int-evry.fr/mpeg/doc_end_user/documents/130_Alpbach/wg11/m53613-v1-m53613.zip m53613 [G-PCC] [new proposal] Coordinate conversion for attribute coding of cat3-frame data.docx> [retrieved on 20200415]**

   **(Cont. next page)**

- **KHALED MAMMOU (APPLE) ET AL: "[G-PCC] [New proposal] Optimization of the predictive coding scheme for Spinning Lidars", no. m53618, 15 April 2020 (2020-04-15), XP030287264, Retrieved from the Internet <URL:http://phenix.int-evry.fr/mpeg/ doc_end_user/documents/130_Alpbach/wg11/ m53618-v1-m53618.zip [G-PCC][New proposal] Optimization of the predictive coding scheme for Spinning Lidars.docx> [retrieved on 20200415]**
- **DAVID FLYNN ET AL: "[G-PCC][New proposal] Predictive Geometry Coding", no. m51012, 6 October 2019 (2019-10-06), XP030221520, Retrieved from the Internet <URL:http://phenix. int-evry.fr/mpeg/doc_end_user/documents/ 128_Geneva/wg11/m51012-v3-M51012_v3.zip M51012.docx> [retrieved on 20191006]**
- **ANONYMOUS: "G-PCC codec description", no. n19525, 10 October 2020 (2020-10-10), pages 1 - 140, XP030292244, Retrieved from the Internet <URL:https://dms.mpeg.expert/doc_end_user/ documents/131_OnLine/wg11/w19525.zip w19525.docx> [retrieved on 20201010]**
- **LASSERRE (BLACKBERRY) S ET AL: "[GPCC] [CE 13.22 related] An improvement of the planar coding mode", no. m50642, 2 October 2019 (2019-10-02), XP030221087, Retrieved from the Internet <URL:http://phenix.int-evry.fr/mpeg/ doc_end_user/documents/128_Geneva/wg11/ m50642-v1-m50642_%5BGPCC%5D_% 5BCE13.22related% 5DAnimprovementoftheplanarcodingmode. docx.zip m50642_[GPCC]_[CE 13.22 related] An improvement of the planar coding mode.pptx> [retrieved on 20191002]**
- **NORITAKA IGUCHI (PANASONIC) ET AL: "[G-PCC][New]Predictive geometry angular mode using spherical LiDAR data input", no. m55361, 7 October 2020 (2020-10-07), XP030292875, Retrieved from the Internet <URL:https://dms. mpeg.expert/doc_end_user/documents/ 132_OnLine/wg11/m55361-v1-m55361.zip m55361/m55361.docx> [retrieved on 20201007]**

**Description**

### TECHNICAL FIELD

The present invention belongs to the field of point cloud data processing technologies, and in particular, to a point cloud data preprocessing method, a point cloud geometry coding method and apparatus.

### BACKGROUND

In a point cloud G-PCC (Geometry-based Point Cloud Compression, geometry-based point cloud compression) coder framework, geometric information of a point cloud and attribute information corresponding to each point are coded separately. At present, geometry coding and decoding of the G-PCC can be divided into geometry coding and decoding based on an oc-tree and geometry coding and decoding based on a prediction tree. The geometry coding based on a prediction tree first sequences inputted point clouds, and establishes a prediction tree structure in two different manners at a coding side. Then, based on the prediction tree structure, each node in the prediction tree is traversed, geometric position information of the nodes is predicted by selecting different prediction modes to obtain a predicted residual, and the geometric predicted residual is quantified by using quantization parameters. Finally, through continuous iteration, the predicted residual of the position information of prediction tree nodes, the prediction tree structure, and the quantization parameters are coded to generate a binary bitstream.

Prediction tree coding based on lidar calibration information is a currently commonly used geometry coding manner. For each laser scanner of the lidar, collection points belonging to a same laser scanner should be regularly distributed in a cylindrical coordinate system. However, due to factors such as noise, a measurement error, and a jitter of a device, actual data presents a non-uniform distribution, resulting in poor correlation between the data, low prediction accuracy, and low coding efficiency.

However, the point cloud coding and decoding technology based on a prediction tree establish a tree structure by using only some parameters of a lidar device. The tree structure does not fully reflect the spatial correlation of the point cloud, which is not conducive to the prediction and entropy coding of the point cloud, thereby affecting coding efficiency. However, an existing G-PCC method determines a relationship between each point and the laser scanner only through correction in the vertical direction, which results in that other variables need to be introduced to assist the coding of horizontal information upon coding, increasing the amount of information that needs to be coded, and reducing geometry coding efficiency.

With regard to the prior art, reference is made to Hyun-Mook Oh et al.: "[G-PCC] [new proposal] Coordinate conversion for attribute coding of cat3-frame data", 130. MPEG meeting; 20200420 - 20200424, Alpbach, (Motion Picture Expert Group or ISO/IEC JTC1/SC29/WG11), 20200415. Further reference is made to Khaled Mammou et al.: "[G-PCC] [New proposal] Optimization of the predictive coding scheme for Spinning Lidars", 130. MPEG meeting; 20200420 - 20200424, Alpbach, (Motion Picture Expert Group or ISO/IEC JTC1/SC29/WG11), 20200415; and David Flynn et al.: "[G-PCC][New proposal] Predictive Geometry Coding", 128. MPEG meeting; 20191007 - 20191011, Geneva, (Motion Picture Expert Group or ISO/IEC JTC1/SC29/WG11), 20191006.

The document "G-PCC codec description",131. MPEG MEETING; 20200629 - 20200703; ONLINE; (MOTION PICTURE EXPERT GROUP OR ISO/IEC JTC1/SC29/WG11), no. n19525 (2020-10-10), is a G-PCC coded description disclosing discloses conversion of LIDAR point clouds into angular / cylindrical-like coordinates (radius, azimuth, elevation) and use of LIDAR calibration parameters: number of lasers, per-laser elevation angles, possibly φ-per-turn, etc. The angular mode disclosed uses LIDAR radius/angles as measured (plus quantisation, scaling etc.), but does not regularise the radial component via a point-to-plane distortion-driven ray-plane intersection.

### SUMMARY

To resolve the problem of improving geometry coding efficiency, embodiments of the present application provide a point cloud geometry prediction coding method and apparatus according to the enclosed independent claims. Advantageous features of the present invention are defined in the corresponding subclaims. In the following, parts of the description and drawings referring to embodiments, which are not covered by the claims, are not presented as embodiments of the invention but as examples useful for understanding the invention.

An embodiment of the present invention provides a point cloud geometry coding method as defined by the features of claim 1.

In an embodiment of the present invention, the determining a prediction mode for each point in the regularized structure, and performing geometric prediction on each point by using the selected prediction mode to obtain to-be-coded information includes:

establishing a prediction tree structure based on lidar calibration information;
selecting a prediction mode for each point according to the prediction tree structure;
performing geometric prediction on each point in the prediction tree structure according to the selected prediction mode, to obtain a geometric predicted residual of each point; and
using the geometric predicted residual as part of the to-be-coded information.

In an embodiment of the present invention, the performing geometric prediction on each point in the prediction tree structure according to the selected prediction mode, to obtain a geometric predicted residual of each point includes:

predicting cylindrical coordinates $(r,j,i)$ of a current node according to a type of the current node and the selected prediction mode, to obtain a predicted value $(r',j',i')$ and a predicted residual $(r_r,r_j,r_i)$ of the current node in a cylindrical coordinate system, where a predicted value $j'$ of an azimuth angle of the current node is calculated according to the following formula:

$$j' = j_{prev} + n$$;

where

$j_{prev}$ represents a predicted azimuth angle of the current node; $n$ represents a quantity of points that need to be skipped between a parent node and the current node according to a scanning speed, the predicted residual $\hat{n}$ is $\hat{n} = n - n'$, and $n'$ represents a quantity of points that need to be skipped by coded nodes adjacent to the current node; and
performing difference prediction according to Cartesian coordinates $(x,y,z)$ and predicted Cartesian coordinates $(\hat{x},\hat{y},\hat{z})$ of the current node to obtain a predicted residual $(r_x,r_y,r_z)$ in a Cartesian coordinate system.

Another embodiment of the present invention further provides a point cloud geometry coding apparatus as defined by the features of claim 4.
Beneficial effects of the present invention are as follows.

1. According to the point cloud data processing method provided in the present invention, an original inputted point cloud is subjected to regularization preprocessing, so that the point cloud presents regularized distribution in horizontal and vertical directions, which better reflects a spatial correlation of the point cloud, so as to facilitate further processing of the point cloud data.
2. In the present invention, when regularization processing is performed, a two-dimensional structure is adjusted by using a geometric distortion measure, which ensures the quality of a point cloud model.
3. According to the point cloud geometry coding method provided in the present invention, when the point cloud data is preprocessed, regularization processing is performed in a direction of an azimuth angle of the point cloud, so that there is no need to use additional bitstreams to code auxiliary information in the direction of the azimuth angle upon coding, which saves bitstreams and improves coding efficiency.
4. In the present invention, when geometry coding is performed on a regularized point cloud, horizontal and vertical directions are combined by effectively utilizing a regularized structure, to perform predictive coding, thereby improving geometry coding efficiency.

The following further describes the present invention in detail with reference to accompanying drawings and embodiments.

## BRIEF DESCRIPTION OF DRAWINGS

FIG. 1 is a schematic diagram of a point cloud data preprocessing method according to an embodiment of the present invention;
FIG. 2 is a schematic structural diagram of a lidar according to an embodiment of the present invention;
FIG. 3 is a schematic structural diagram of distribution of original collected data according to an embodiment of the present invention;
FIG. 4 is an unfolded diagram of a cylindrical coordinate system according to an embodiment of the present invention;
FIG. 5 is a schematic diagram of point-to-plane interpolation processing according to an embodiment of the present invention;
FIG. 6 is a comparison diagram before and after regularization processing according to an embodiment of the present invention;

FIG. 7 is a schematic diagram of a point cloud geometry coding method according to an embodiment of the present invention;

FIG. 8 is a schematic structural diagram of a point cloud geometry coding apparatus according to an embodiment of the present invention;

FIG. 9 is a schematic diagram of a point cloud geometry decoding method according to an embodiment of the present invention; and

FIG. 10 is a schematic structural diagram of a point cloud geometry decoding apparatus according to an embodiment of the present invention.

## DESCRIPTION OF EMBODIMENTS

The present invention is further described below in detail with reference to specific embodiments, but implementations of the present invention are not limited thereto.

## Embodiment 1

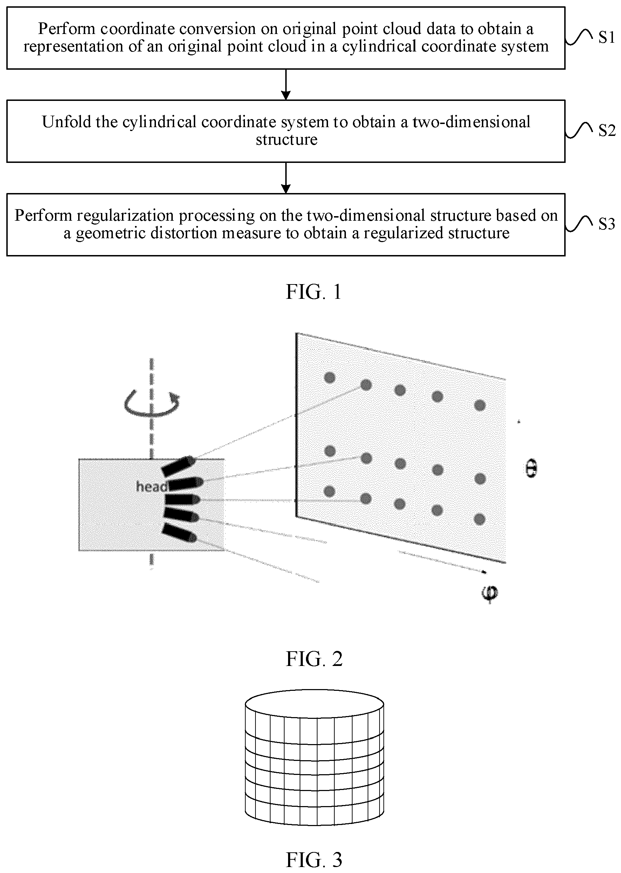

FIG. 1 is a schematic diagram of a point cloud data preprocessing method used in a point cloud geometry coding method according to an embodiment of the present invention, and the preprocessing method includes:

S1: Perform coordinate conversion on original point cloud data to obtain a representation of an original point cloud in a cylindrical coordinate system.

Specifically, the original point cloud data usually consists of a set of three-dimensional space points, and each space point records its own geometric position information, and additional attribute information such as color information, reflectivity information, and normal information. The geometric position information of the point cloud is usually represented based on a Cartesian coordinate system, that is, represented by x, y, and z coordinates of the point. The original point cloud data is obtained through a 3D lidar scanning device. In this embodiment, it is assumed that the obtained geometric position information of the original point cloud data is represented based on the Cartesian coordinate system as $(x,y,z)$. It should be noted that a representation method of the geometric position information of the original point cloud data is not limited to Cartesian coordinates.

Specifically, before performing coordinate conversion on the original point cloud, quantization processing and reordering processing may further be performed on the original point cloud, so as to facilitate subsequent predictive coding.

FIG. 2 is a schematic structural diagram of a lidar according to an embodiment of the present invention. The lidar consists of a plurality of laser scanners. When a lidar is described, the so-called "line number" is a quantity of laser scanners included in the lidar. The laser scanners are distributed along both sides of the central axis of the lidar with different pitch angles $\theta_i$, so that spatial information of different objects in the vertical direction in space can be obtained. Each laser scanner can be regarded as a relatively independent collection system. During collection, through the rotation of a base, all laser scanners obtain position information of the objects in space according to a certain sampling rate.

In this embodiment, Cartesian coordinates $(x,y,z)$ of the original point cloud data can be converted into cylindrical coordinates $(r,\phi,i)$ according to an existing conversion formula, to obtain a representation of the original point cloud in a cylindrical coordinate system.

FIG. 3 is a schematic structural diagram of distribution of original collected data in a cylindrical coordinate system according to an embodiment of the present invention. In an ideal situation, point cloud data obtained by a lidar presents a uniform distribution in directions of an azimuth angle and a pitch angle in the cylindrical coordinate system. However, due to factors such as noise, mechanical jitters, and the alignment of an internal coordinate system of the lidar, the point cloud presents a characteristic of non-uniform distribution.

S2: Unfold the cylindrical coordinate system to obtain a two-dimensional structure.

In this embodiment, a pitch angle $\theta$ and an azimuth angle $\varphi$ of each point after regularization are first determined by using the structure and collection parameters of the lidar. The pitch angle $\theta$ may be directly obtained from a vertical collection range of each laser scanner in a calibration file, while the azimuth angle $\varphi$ needs to be determined based on a sampling interval $\varphi_{sample}$.

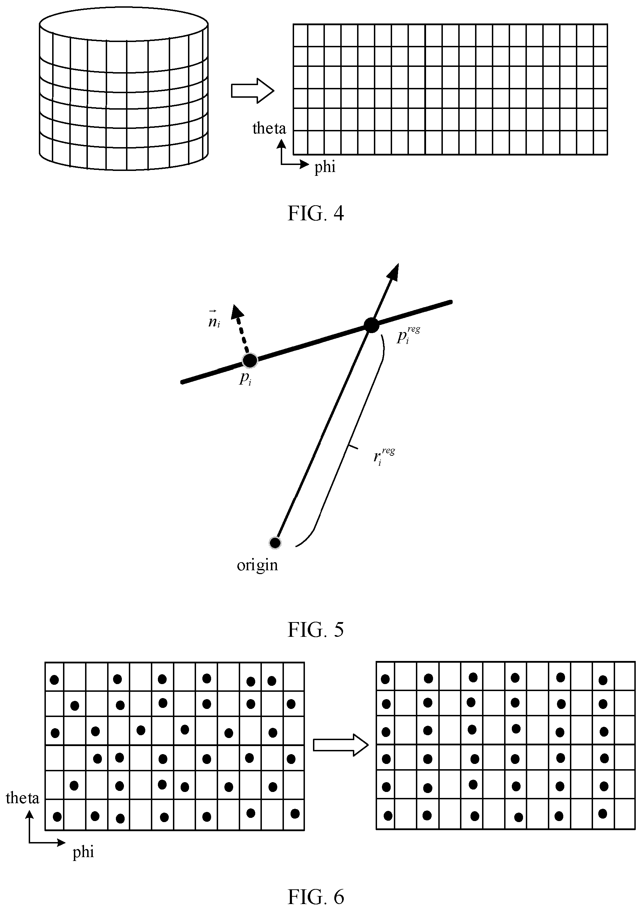

Specifically, FIG. 4 is an unfolded diagram of a cylindrical coordinate system according to an embodiment of the present invention. A vertical interval and a horizontal interval may become a concept similar to resolution in an image. Therefore, a vertical resolution *theta* and a horizontal resolution *phi* are respectively:

$$theta = laserNum,$$

and

$$phi = \frac{360}{\varphi_{sample}}.$$

S3: Perform regularization preprocessing on the two-dimensional structure based on a geometric distortion measure to obtain a regularized structure.

After the vertical resolution and the horizontal resolution is determined in step S2, it is further necessary to determine a radius r of each point to a center after regularization.

The selection of the radius directly determines whether the regularized point cloud can maintain a same geometric structure as an inputted point cloud. In addition, for applications such as recognition and automatic driving, the distortion of the geometric structure directly determines the performance of such applications. Therefore, to reduce geometric structural distortion of a model as much as possible, this embodiment uses an idea of geometric distortion measure to perform nearest neighbor interpolation to calculate an r component of a corresponding point after regularization processing, so as to ensure that the distortion of the geometric reconstruction quality in D2 (point-to-plane) can be controlled within a certain range.

In this invention, the two-dimensional structure is adjusted based on a point-to-plane geometric distortion measure (D2) to obtain a regularized structure.

FIG. 5 is a schematic diagram of point-to-plane interpolation processing according to the present invention. Specifically,

1. first search for a point closest to a current node in directions of an azimuth angle and a pitch angle in the two-dimensional structure;
2. construct a ray emitted from an origin (origin) based on angle information of the point;
3. construct a plane based on a current node $p_i$ and a normal of the current node;
4. obtain an intersection of the ray and the plane, and record a distance between the origin and the intersection;
5. use the distance as a radius of the current node to a center after regularization, that is, the r component in cylindrical coordinates; and
6. repeat the foregoing steps to complete processing of all points to obtain the regularized structure of the original point cloud data.

In this case, the regularization preprocessing of the cylindrical coordinates $(r, \phi, i)$ of the point cloud is completed, and regularized coordinates $(r, j, i)$ are obtained. FIG. 6 is a comparison diagram before and after regularization processing according to an embodiment of the present invention.

In this manner, based on the regularized structure constructed through the foregoing steps, the distortion of each point to a plane can be ensured to be zero, and geometric structure information of the original point cloud is maintained, which has little impact on the performance of the applications such as recognition and automatic driving, and the regularized structure is quite friendly to further processing of the point cloud.

In another embodiment of the present invention, the two-dimensional structure may further be adjusted based on a point-to-point geometric distortion measure (D1) to obtain the regularized structure. In this way, both geometric distortion measure D1 and the quality of a point cloud model can be ensured.

In addition, the two-dimensional structure may further be adjusted based on a point-to-point (D1) and point-to-plane (D2) comprehensive distortion measure to obtain the regularized structure. In this way, an overall geometric distortion measure of D1 and D2 and the quality of the point cloud model can be ensured simultaneously.

Further, the two-dimensional structure may be adjusted based on a point-to-line geometric distortion measure to obtain the regularized structure. Based on statistics, the point-to-line geometric distortion measure is between the point-to-point distortion measure and the point-to-plane distortion measure, so that the overall geometric distortion of D1 and D2 and the quality of the point cloud model can be ensured simultaneously.

According to the point cloud data processing method provided in the present invention, an original inputted point cloud is subjected to regularization preprocessing, so that the point cloud presents regularized distribution in horizontal and vertical directions, which increases the correlation between the data, so as to facilitate further processing of the point cloud data. In addition, when the regularization processing is performed, regularization preprocessing in the horizontal direction is performed by using a geometric distortion measure, which ensures the quality of the point cloud model.

**Embodiment 2**

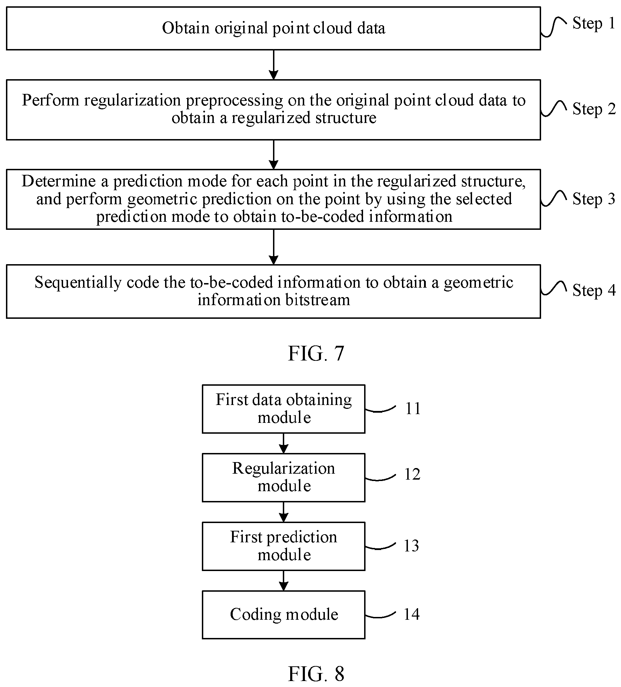

FIG. 7 is a schematic diagram of a point cloud geometry coding method according to the present invention, and the method includes the following steps:

Step 1: Obtain original point cloud data.

In this embodiment, the original point cloud data is represented by Cartesian coordinates as $(x,y,z)$.

Step 2: Perform regularization preprocessing on the original point cloud data to obtain a regularized structure.

Specifically, the preprocessing method provided in the foregoing Embodiment 1 is used to perform regularization preprocessing on the original point cloud data to obtain the regularized structure.

More specifically, after the regularization processing, cylindrical coordinates $(x,y,z)$ are converted into a regular $(r,j,i)$ structure.

Step 3. Determine a prediction mode for each point in the regularized structure, and perform geometric prediction on each point by using the selected prediction mode to obtain to-be-coded information.

First, establish a prediction tree structure based on lidar calibration information.

Then, select a prediction mode for a current node according to the prediction tree structure.

In this embodiment, the established prediction tree is traversed in depth-first order, and each node in the tree can only be predicted by an ancestor thereof.

Further, this embodiment provides the following four prediction modes:

Mode0: No prediction

Model: Delta prediction (that is, p0)

Mode2: Linear prediction (that is, 2p0-p1)

Mode3: Parallelogram prediction (that is, p0+p1-p2), where

p0, p1, and p2 are positions of a parent node, a grandparent node, and a great-grandparent node of the current node respectively. A best prediction mode may be selected for the current node based on the reconstruction quality, to perform a prediction.

Then, geometric prediction is performed on each point in the prediction tree structure according to the selected prediction mode, to obtain a geometric predicted residual of each point. In this embodiment, the geometric prediction includes cylindrical coordinate prediction and Cartesian coordinate prediction. A specific process is as follows.

Cylindrical coordinates $(r,j,i)$ of a current node is predicted according to a type of the current node and the selected prediction mode, to obtain a predicted value $(r', j', i')$ and a predicted residual $(r_r, r_j, r_i)$ of the current node in a cylindrical coordinate system.

If the current node is a root node of the prediction tree, Mode0 is selected as the prediction mode, that is, there is no prediction for the cylindrical coordinates of the current node, and corresponding predicted cylindrical coordinates are $(r_{min}, j_{prev}, i_{prev})$, where $r_{min}$ is the minimum value of an r component obtained after coordinate conversion of the entire point cloud. If the current node has no parent node, the value of $j_{prev}, i_{prev}$ is 0, otherwise it is cylindrical coordinate component of a parent node. Predicted Cartesian coordinates are $(\hat{x}, \hat{y}, \hat{z})$ obtained by inverse conversion of cylindrical coordinates $(r,j,i)$ of the point.

If the current node is not a root node, and Mode1 is selected as the prediction mode, cylindrical coordinates of the current node are predicted according to cylindrical coordinates $(r_{min}, j_{prev}, i_{prev})$ of a parent node thereof, so that predicted cylindrical coordinates $(r', j', i')$ of the current node can be obtained, and predicted Cartesian coordinates are $(\hat{x}, \hat{y}, \hat{z})$ obtained by inverse conversion of original cylindrical coordinates $(r,j,i)$.

If the current node is not a root node, and Mode2 or Mode3 is selected as the prediction mode, cylindrical coordinates of the current node are predicted in a corresponding prediction manner, so that predicted cylindrical coordinates of the current node can be obtained as $(r', j', i')$. Similarly, predicted Cartesian coordinates are $(\hat{x}, \hat{y}, \hat{z})$ obtained by inverse conversion of original cylindrical coordinates $(r,j,i)$.

The best prediction mode for the current node is used to predict the cylindrical coordinates $(r,j,i)$ of the current node, to obtain a predicted residual $(r_r, r_j, r_i)$ in a cylindrical coordinate system.

It should be noted that a predicted value $j'$ of an azimuth angle of the current node is calculated according to the following formula:

$$j' = j_{prev} + n,$$

where

$j_{prev}$ represents a predicted azimuth angle of the current node, $n$ represents a quantity of points that need to be skipped between a parent node and the current node according to a scanning speed. If a Laser (laser scanner) of the current node is i, and coding and decoding of a node with a Laser i+1 that is adjacent to the current node has been completed, the parameter *n* can further use a corresponding position node *n'* with the Laser i+1 for difference prediction, to obtain a predicted residual of the quantity of the points that need to be skipped, that is $\hat{n}$ = n-n'.

In addition, in this embodiment, when geometry predictive coding is performed based on the regularized structure, coding and decoding are sequentially performed based on each Laser. Therefore, a coded node j component with a Laser i is needed to be temporarily stored for predicting a node j component at a position corresponding to a coding Laser i+1-N.

Difference prediction is performed by using the Cartesian coordinates $(x,y,z)$ and the predicted Cartesian coordinates $(\hat{x},\hat{y},\hat{z})$ of the current node to obtain a predicted residual $(r_x, r_y, r_z)$ in a Cartesian coordinate system.

Finally, the predicted residual $(r_r,r_j,r_i)$ in the cylindrical coordinate system, the predicted residual $(r_x,r_y,r_z)$ in the Cartesian coordinate system, the predicted residual $\hat{n}$ of the points that need to be skipped, and other parameters that need to be coded, such as one of information among a quantity of child nodes of the current node, a prediction mode for the current node and other information, are used as to-be-coded information.

Step 4: Sequentially code the to-be-coded information to obtain a geometric information bitstream.

Specifically, for the to-be-coded information of each node, first, the quantity of child nodes of the current node needs to be coded, and second, the prediction mode for the current node, the predicted residual $(r_r,r_j,r_i)$ and the predicted residual $(r_x,r_y,r_z)$ respectively corresponding to the current node, and the predicted residual $\hat{n}$ of the points that need to be skipped are coded.

In this case, the geometry predictive coding of the point cloud is completed.

According to the point cloud geometry coding method provided in this embodiment, an original inputted point cloud is subjected to regularization processing, so that the point cloud presents regularized distribution in horizontal and vertical directions, which increases the correlation between data and improves coding efficiency. In addition, due to the regularization processing in the direction of the azimuth angle of the point cloud, there is no need to use additional bitstreams to code auxiliary information in the direction of the azimuth angle upon coding, which saves bitstreams and improves coding efficiency.

In this embodiment, when geometry coding is performed on a regularized point cloud, horizontal and vertical directions are combined by effectively utilizing a regularized structure, to perform predictive coding, thereby improving geometry coding efficiency.

In another embodiment of the present invention, in step 3, an existing predictor-based geometry coding mode may be alternatively used to convert Cartesian coordinates $(x,y,z)$ into cylindrical coordinates $(r,\varphi,i)$, and then prediction is performed to obtain predicted values $(\hat{r},\hat{\phi},\hat{i})$ and $(\hat{x},\hat{y},\hat{z})$, and predicted residuals $(r_r,r_\phi,r_i)$ and $(r_x,r_y,r_z)$. In addition, a lossless coding manner is used to code a quantity n of skipped points corresponding to a component $\varphi$, and a specific process is not described in detail herein.

## Embodiment 3

Based on the foregoing Embodiment 2, a mode switch can further be set to determine whether to initialize original point cloud data in the entire coding process.

Specifically, geom_enable_regular_flag is introduced to a gps (Geometry parameter set syntax) parameter set to determine whether the geometry enables a regularization preprocessing scheme of the present invention in the entire coding. When geom_enable_regular_flag is 1, it means enabling; otherwise, it means disabling. See attached table 1 for details.

When the regularization preprocessing scheme is enabled, the point cloud data can be preprocessed first by using the point cloud data preprocessing method provided in the foregoing Embodiment 1, and then predictive coding is performed on the point cloud data by using the coding scheme provided in the Embodiment 2 or an existing geometry predictive coding method, so as to improve coding efficiency.

When the regularization preprocessing scheme is disabled, the prediction method provided in the foregoing Embodiment 2 may be directly used to predict and code the original point cloud data.

## Embodiment 4

Based on the foregoing Embodiment 2, this embodiment provides a point cloud geometry coding apparatus. FIG. 8 is a schematic structural diagram of a point cloud geometry coding apparatus according to an embodiment of the present invention, and the apparatus includes:

a first data obtaining module 11, configured to obtain original point cloud data;
a regularization module 12, configured to perform regularization preprocessing on the original point cloud data to obtain a regularized structure;

a first prediction module 13, configured to determine a prediction mode for each point in the regularized structure, and perform geometric prediction on each point by using the selected prediction mode to obtain to-be-coded information; and

a coding module 14, configured to sequentially code the to-be-coded information to obtain a geometric information bitstream.

The apparatus provided in this embodiment can implement the coding method provided in the foregoing Embodiment 2, and a specific implementation process is not described herein again.

Embodiment 5

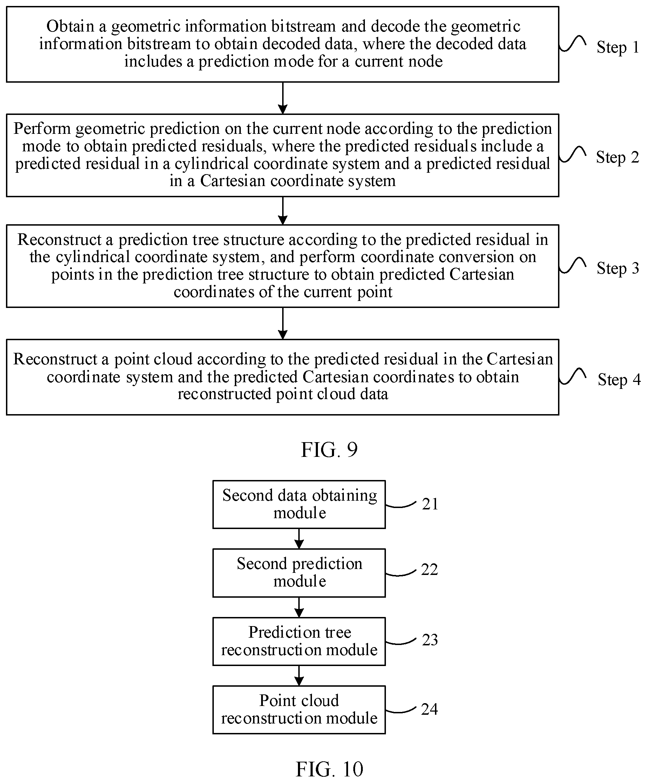

FIG. 9 is a schematic diagram of a point cloud geometry decoding method according to an embodiment not forming part of the claimed invention, and the method includes:

Step 1: Obtain a geometric information bitstream and decode the geometric information bitstream to obtain decoded data, where the decoded data includes a prediction mode for a current node.
Step 2: Perform geometric prediction on the current node according to the prediction mode to obtain predicted residuals, where the predicted residuals include a predicted residual in a cylindrical coordinate system and a predicted residual in a Cartesian coordinate system.

Based on the prediction mode for the current node that is obtained by decoding and reconstructed cylindrical coordinates of an ancestor thereof, cylindrical coordinates of the current node are predicted and a corresponding predicted value is generated. A specific process is as follows.

If the current node is a root node of the prediction tree, Mode0 is selected as the prediction mode, that is, there is no prediction for the cylindrical coordinates of the current node, and corresponding predicted cylindrical coordinates are $(r_{min}, j_{prev}, i_{prev})$, where $r_{min}$ is the minimum value of an r component obtained after coordinate conversion of the entire point cloud. If the current node has no parent node, the value of $j_{prev}, i_{prev}$ is 0, otherwise it is cylindrical coordinate component of a parent node. Predicted Cartesian coordinates are $(\hat{x}, \hat{y}, \hat{z})$ obtained by inverse conversion of original cylindrical coordinates $(r, j, i)$ of the point.

If the current node is not a root node, and Mode1 is selected as the prediction mode, cylindrical coordinates of the current node are predicted according to cylindrical coordinates $(r_{min}, j_{prev}, i_{prev})$ of a parent node thereof, so that predicted cylindrical coordinates $(r', j', i')$ of the current node can be obtained, and predicted Cartesian coordinates are $(\hat{x}, \hat{y}, \hat{z})$ obtained by inverse conversion of original cylindrical coordinates $(r, j, i)$.

If the current node is not a root node, and Mode2 or Mode3 is selected as the prediction mode, cylindrical coordinates of the current node are predicted in a corresponding prediction manner, so that predicted cylindrical coordinates of the current node can be obtained as $(r', j', i')$. Similarly, predicted Cartesian coordinates are $(\hat{x}, \hat{y}, \hat{z})$ obtained by inverse conversion of original cylindrical coordinates $(r, j, i)$.

The best prediction mode for the current node is used to predict cylindrical coordinates $(r, j, i)$ of the current node, to obtain a predicted residual $(r_r, r_j, r_i)$ in a cylindrical coordinate system.

Same as a coding side, it should be noted that a predicted value $j'$ of an azimuth angle of the current node is calculated according to the following formula:

$$j' = j_{prev} + n$$
,

where

$j_{prev}$ represents a predicted azimuth angle of the current node; and $n$ represents a quantity of points that need to be skipped between a parent node and the current node according to a scanning speed. Note that if a laser of the current node is i, and coding and decoding of a node with a Laser i+1 that is adjacent to the current node has been completed, the parameter $n$ is obtained by restoring the node $n'$ at a position corresponding to the Laser i-1, that is $n = \hat{n} + n'$.

In this case, the predicted residual in the cylindrical coordinate system, the predicted residual of the points that need to be skipped, and the predicted residual in the Cartesian coordinate system are obtained.

Step 3: Reconstruct a prediction tree structure according to the predicted residual in the cylindrical coordinate system, and perform coordinate conversion on points in the prediction tree structure to obtain predicted Cartesian coordinates of the current node.

Specifically, a cylindrical coordinate residual $(r_r, r_j, r_i)$ obtained by decoding and predicted cylindrical coordinates $(r', j', i')$ of the current node are used to calculate reconstructed cylindrical coordinates $(r, j, i)$ of the current node.

$$(r,j,i){=}(r\,',j\,',i\,')+(r_r,r_j,r_i)$$

After obtaining the reconstructed cylindrical coordinates of the current node, the position of the current node in the prediction tree can be further determined according to the reconstructed cylindrical coordinates $(r,j,i)$, so as to reconstruct the prediction tree.

The reconstructed cylindrical coordinates $(r,j,i)$ of the current node is converted into the Cartesian coordinates $(\hat{x}, \hat{y}, \hat{z})$ according to the following formula, and $(\hat{x}, \hat{y}, \hat{z})$ is the predicted Cartesian coordinates of the current node.

$$\varphi{=}j \times \varphi_{sample} - 180$$

$$\hat{x} = r \cdot \cos \phi$$

$$\hat{y} = r \cdot \sin \phi$$

$$\hat{z} = r \times \tan(\theta(i)) - zLaser(i),$$

where

$i$ is a LaserID corresponding to the point. Prior information of each Laser is different, that is, an elevation angle $\theta$ and a height $zLaser$ in the vertical direction are different. Therefore, an elevation angle corresponding to the i-th Laser is $\theta(i)$, and the height in the vertical direction is $zLaser(i)$.

Step 4: Reconstruct a point cloud according to the predicted residual in the Cartesian coordinate system and the predicted Cartesian coordinates to obtain reconstructed point cloud data.

According to the following formula, a Cartesian coordinate residual $(r_x, r_y, r_z)$ obtained by decoding and predicted Cartesian coordinates $(\hat{x}, \hat{y}, \hat{z})$ of the current node are used to calculate reconstructed Cartesian coordinates $(x, y, z)$ of the current node.

$$(x, y, z){=}(\hat{x}, \hat{y}, \hat{z})+(r_x, r_y, r_z)$$

In this case, the decoding of the point cloud is completed, and a reconstructed voxelized point cloud is obtained.

**Embodiment 6**

Based on the foregoing Embodiment 5, this embodiment provides a point cloud geometry decoding apparatus. FIG. 10 is a schematic structural diagram of a point cloud geometry decoding apparatus not forming part of the claimed invention, and the apparatus includes:

a second data obtaining module 21, configured to obtain a geometric information bitstream and decode the geometric information bitstream to obtain decoded data, where the decoded data includes a prediction mode for a current node;
a second prediction module 22, configured to perform geometric prediction on the current node according to the prediction mode to obtain predicted residuals, where the predicted residuals include a predicted residual in a cylindrical coordinate system and a predicted residual in a Cartesian coordinate system;
a prediction tree reconstruction module 23, configured to reconstruct a prediction tree structure according to the predicted residual in the cylindrical coordinate system, and perform coordinate conversion on points in the prediction tree structure to obtain predicted Cartesian coordinates of the current node; and
a point cloud reconstruction module 24, configured to reconstruct a geometric point cloud according to a geometric predicted value of the current node and the predicted residual to obtain reconstructed point cloud data.

The apparatus provided in this embodiment can implement the decoding method provided in the foregoing Embodiment 4, and a specific implementation process is not described herein again.

The foregoing contents are detailed descriptions of the present invention with reference to specific exemplary embodiments, and it should not be considered that the specific implementation of the present invention is limited to these descriptions. A person of ordinary skill in the art to which the present invention belongs can further make simple deductions or replacements without departing from the concept of the present invention, and such deductions or replacements should all be considered as falling within the protection scope of the present invention.

**Attached Table 1: Geometry parameter set syntax**

| geometry_parameter_set( ) { | Descriptor |
|---|---|
| **gps_geom_parameter_set_id** | u(4) |
| **gps_seq_parameter_set_id** | u (4) |
| **gps_gsh_box_log2_scale_present_flag** | u(1) |
| ***geom_enable_regular_flag*** | *u(1)* |
| if( !gps_gsh_box_log2_scale_present_flag) | |
| **gps_gs_box_log2_scale** | ue(v) |
| **geom_tree_type** | u(1) |
| if( geom_tree_type == 1 ) | |
| **unique_geometry_points_flag** | u(1) |
| if( geom_tree_type == 0 ) { | |
| **geom_num_points_list_present_flag** | u(1) |
| **unique_geometry_points_flag** | u(1) |
| **inferred_direct_coding_mode** | u(2) |
| if( inferred_direct_coding_mode ) | |
| **joint_2point_idcm_enabled_flag** | u(1) |
| **geom_tree_coded_axis_list_present_flag** | u(1) |
| **log2_neighbour_avail_boundary_minus1** | u(3) |
| if ( log2_neighbour_avail_boundary_minus1 > 0 ) { | |
| **adjacent_child_contextualization_enabled_flag** | u(1) |
| **log2_intra_pred_max_node_size** | ue(v) |
| } | |
| **bitwise_occupancy_coding_flag** | u(1) |
| **geometry_planar_enabled_flag** | u(1) |
| if( geometry_planar_enabled_flag ){ | |
| **geom_planar_th**[ 0 ] | ue(v) |
| **geom_planar_th**[ 1 ] | ue(v) |
| **geom_planar_th**[ 2 ] | ue(v) |
| if( inferred_direct_coding_mode ) | |
| **geom_idem_rate_minus1** | u(5) |
| } | |
| } | |
| **geometry_angular_enabled_flag** | u(1) |
| if( geometry_angular_enabled_flag ){ | |
| **geom_slice_angular_origin_present_flag** | u(1) |
| if( !geom_slice_angular_origin_present_flag ) { | |
| **geom_angular_origin_bits_minus1** | ue(v) |
| for( k = 0; k < 3; k++ ) | |

(continued)

| | |
|---|---|
| **geom_angular_origin_xyz**[ k ] | s(v) |
| } | |
| if( geom_tree_type == 1 ) { | |
| **geom_angular_azimuth_scale_log2** | ue(v) |
| **geom_angular_azimuth_step_minus1** | ue(v) |
| **geom_angular_radius_scale_log2** | ue(v) |
| } | |
| **number_lasers_minus1** | ue(v) |
| **laser_angle_init** | se(v) |
| **laser_correction_init** | se(v) |
| if( geom_tree_type = = 0 ) | |
| **laser_phi_per_turn_init_minus1** | ue(v) |
| for( i = 1; i <= number _lasers_minus1; i++ ) { | |
| **laser_angle_diff**[ i ] | se(v) |
| **laser_correction_diff**[ i ] | se(v) |
| if( geom_tree_type = = 0 ) | |
| **laser_phi_per_turn_diff**[ i ] | se(v) |
| } | |
| if( geometry_planar_enabled_flag ) | |
| **planar_buffer_disabled_flag** | u(1) |
| } | |
| **geom_scaling_enabled_flag** | u(1) |
| if( geom_scaling_enabled_flag ) { | |
| **geom_base_qp** | ue(v) |
| **geom_qp_multiplier_log2** | u(2) |
| if( geom_tree_type = = 1 ) | |
| **geom_qp_offset_intvl_log2** | ue(v) |
| else if( inferred_direct_coding_mode ) | |
| **geom_direct_coding_mode_qp_offset** | se(v) |
| } | |
| **gps_extension_flag** | u(1) |
| if( gps_extension_flag ) | |
| while( more_data_in_byte_stream( ) ) | |
| **gps_extension_data_flag** | u(1) |
| byte_alignment( ) | |
| } | |

## Claims

1. A point cloud geometry coding method, comprising:

obtaining original point cloud data obtained through a LIDAR device consisting of a plurality of laser scanners with different pitch angles $\theta_i$ in the vertical direction and a rotation sampling rate;
performing regularization preprocessing on the original point cloud data to obtain a regularized structure;
determining a prediction mode for each point in the regularized structure, and performing geometric prediction on each point by using the selected prediction mode to obtain to-be-coded information; and
sequentially coding the to-be-coded information to obtain a geometric information bitstream; wherein the regularization preprocessing comprises:

performing (S1) coordinate conversion on the original point cloud data to obtain a representation of the original point cloud in a cylindrical coordinate system;
unfolding (S2) the cylindrical coordinate system to obtain a two-dimensional structure consisting of points of the original point cloud and determining, for each point after regularization, a pitch angle $\theta$ and an azimuth angle $\varphi$ based on a vertical collection range of each laser scanner of the LIDAR device and a sampling interval $\varphi_{sample}$ of the LIDAR device, respectively, wherein the two dimensional structure has a vertical resolution given by the laser scanner number of the LIDAR device and a horizontal resolution given by $360/\varphi_{sample}$; and
performing (S3) regularization preprocessing on the two-dimensional structure based on a geometric distortion measure to obtain the regularized structure by determining, for each point after regularization, a radial coordinate based on a point-to-plane geometric distortion measure, the point-to-plane geometric distortion measure comprising:

- identifying a neighboring point of a current point in directions of an azimuth angle and a pitch angle, wherein the neighboring point is a point after regularization and the current point is a point before regularization;
- constructing a ray emitted from an origin based on an azimuth angle and a pitch angle of the neighboring point;
- constructing a plane based on the current point and its normal;
- obtaining an intersection of the ray and the plane, and determining a distance between the origin and the intersection; and
- using the determined distance as the radial coordinate.

2. The point cloud geometry coding method according to claim 1, wherein determining the prediction mode for each point in the regularized structure, and performing geometric prediction on each point by using the selected prediction mode to obtain to-be-coded information comprises:

establishing a prediction tree structure based on lidar calibration information;
selecting a prediction mode for each point according to the prediction tree structure;
performing geometric prediction on each point in the prediction tree structure according to the selected prediction mode, to obtain a geometric predicted residual of each point; and
using the geometric predicted residual as part of the to-be-coded information.

3. The point cloud geometry coding method according to claim 2, wherein the performing geometric prediction on each point in the prediction tree structure according to the selected prediction mode, to obtain a geometric predicted residual of each point comprises:
predicting cylindrical coordinates $(r,j,i)$ of a current node according to a type of the current node and the selected prediction mode, to obtain a predicted value $(r',j',i')$ and a predicted residual $(r_r,r_j,r_i)$ of the current node in a cylindrical coordinate system, wherein a predicted value $j'$ of an azimuth angle of the current node is calculated according to the following formula:

$$j' = j_{prev} + n,$$

wherein

$j_{prev}$ represents a predicted azimuth angle of the current point; $n$ represents a quantity of points that need to be skipped between a parent node and the current node according to a scanning speed, the predicted residual $\hat{n}$ is $\hat{n} = n-n'$, and $n'$ represents a quantity of points that need to be skipped by coded nodes adjacent to the current node; and

performing difference prediction according to Cartesian coordinates ($x,y,z$) and predicted Cartesian coordinates ($\hat{x},\hat{y},\hat{z}$) of the current node to obtain a predicted residual ($r_x,r_y,r_z$) in a Cartesian coordinate system, wherein the predicted Cartesian coordinates ($\hat{x},\hat{y},\hat{z}$) are obtained by inverse conversion of cylindrical coordinates ($r,j,i$) of the point.

4. A point cloud geometry coding apparatus, comprising:

a first data obtaining module (11), configured to obtain original point cloud data obtained through a LIDAR device consisting of a plurality of laser scanners with different pitch angles $\theta_i$ in the vertical direction and a rotation sampling rate;

a regularization module (12), configured to perform regularization preprocessing on the original point cloud data to obtain a regularized structure;

a first prediction module (13), configured to determine a prediction mode for each point in the regularized structure, and to perform geometric prediction on each point by using the selected prediction mode to obtain to-be-coded information; and

a coding module (14), configured to sequentially code the to-be-coded information to obtain a geometric information bitstream; wherein the regularization module (12) is configured to

perform (S1) coordinate conversion on the original point cloud data to obtain a representation of the original point cloud in a cylindrical coordinate system;

unfold (S2) the cylindrical coordinate system to obtain a two-dimensional structure consisting of points of the original point cloud and determine, for each point after regularization, a pitch angle $\theta$ and an azimuth angle $\varphi$ based on a vertical collection range of each laser scanner of the LIDAR device and a sampling interval $\varphi_{sample}$ of the LIDAR device, respectively, wherein the two dimensional structure has a vertical resolution given by the laser scanner number of the LIDAR device and a horizontal resolution given by $360/\varphi_{sample}$; and

perform (S3) regularization preprocessing on the two-dimensional structure by determining, for each point after regularization, a radial coordinate based on a point-to-plane geometric distortion measure, the point-to-plane geometric distortion measure comprising:

- identifying a neighboring point of a current point in directions of an azimuth angle and a pitch angle, wherein the neighboring point is a point after regularization and the current point is a point before regularization;
- constructing a ray emitted from an origin based on an azimuth angle and a pitch angle of the neighboring point;
- constructing a plane based on the current point and its normal;
- obtaining an intersection of the ray and the plane, and determining a distance between the origin and the intersection; and
- using the determined distance as the radial coordinate.

5. The point cloud geometry coding apparatus according to claim 4, wherein the first prediction module (13) is configured to:

establish a prediction tree structure based on lidar calibration information;

select a prediction mode for each point according to the prediction tree structure;

perform geometric prediction on each point in the prediction tree structure according to the selected prediction mode, to obtain a geometric predicted residual of each point; and

use the geometric predicted residual as part of the to-be-coded information.

6. The point cloud geometry coding apparatus according to claim 5, wherein the first prediction module (13) is configured to:

predict cylindrical coordinates ($r,j,i$) of a current node according to a type of the current node and the selected prediction mode, to obtain a predicted value ($r',j',i'$) and a predicted residual ($r_r,r_j,r_i$) of the current node in a cylindrical coordinate system, wherein a predicted value $j'$ of an azimuth angle of the current node is calculated according to the following formula:

$$j' = j_{prev} + n \, ,$$

wherein

$j_{prev}$ represents a predicted azimuth angle of the current point; $n$ represents a quantity of points that need to be skipped between a parent node and the current node according to a scanning speed, the predicted residual $\hat{n}$ is $\hat{n} = n - n'$, and $n'$ represents a quantity of points that need to be skipped by coded nodes adjacent to the current node; and

perform difference prediction according to Cartesian coordinates ($x,y,z$) and predicted Cartesian coordinates ($\hat{x},\hat{y},\hat{z}$) of the current node to obtain a predicted residual ($r_x,r_y,r_z$) in a Cartesian coordinate system, wherein the predicted Cartesian coordinates ($\hat{x},\hat{y},\hat{z}$) are obtained by inverse conversion of cylindrical coordinates ($r,j,i$) of the point.

**Patentansprüche**

1. Verfahren zur Punktwolkengeometriekodierung, umfassend:

   Erlangen von ursprünglichen Punktwolkendaten, die durch ein LIDAR-Gerät erhalten wurden, welches aus einer Vielzahl von Laserscannern mit unterschiedlichen Nickwinkeln $\theta_i$ in vertikaler Richtung und einer Rotationsabtastrate besteht;
   Durchführen einer Regularisierungsvorverarbeitung an den ursprünglichen Punktwolkendaten, um eine regularisierte Struktur zu erhalten;
   Bestimmen eines Vorhersagemodus für jeden Punkt in der regularisierten Struktur und Durchführen einer geometrischen Vorhersage für jeden Punkt unter Verwendung des ausgewählten Vorhersagemodus, um zu kodierende Informationen zu erhalten; und
   sequenzielles Kodieren der zu kodierenden Informationen, um einen geometrischen Informationsbitstrom zu erhalten; wobei die Regularisierungsvorverarbeitung umfasst:

   Durchführen (S1) einer Koordinatentransformation an den ursprünglichen Punktwolkendaten, um eine Darstellung der ursprünglichen Punktwolke in einem zylindrischen Koordinatensystem zu erhalten;
   Entfalten (S2) des zylindrischen Koordinatensystems, um eine zweidimensionale Struktur zu erhalten, die aus Punkten der ursprünglichen Punktwolke besteht, und Bestimmen eines Nickwinkels $\theta$ sowie eines Azimutwinkels $\varphi$ für jeden Punkt nach der Regularisierung basierend auf einem vertikalen Erfassungsbereich jedes Laserscanners des LIDAR-Geräts bzw. einem Abtastintervall $\varphi_{sample}$ des LIDAR-Geräts, wobei die zweidimensionale Struktur eine durch die Laserscanneranzahl des LIDAR-Geräts gegebene vertikale Auflösung und eine durch $360/\varphi_{sample}$ gegebene horizontale Auflösung aufweist; und
   Durchführen (S3) einer Regularisierungsvorverarbeitung an der zweidimensionalen Struktur basierend auf einem geometrischen Verzerrungsmaß, um die regularisierte Struktur zu erhalten, indem für jeden Punkt nach der Regularisierung eine radiale Koordinate basierend auf einem Punkt-zu-Ebene-geometrischen Verzerrungsmaß bestimmt wird, wobei das Punkt-zu-Ebene-geometrische Verzerrungsmaß umfasst:

   - Identifizieren eines benachbarten Punktes eines aktuellen Punktes in Richtungen eines Azimutwinkels und eines Nickwinkels, wobei der benachbarte Punkt ein Punkt nach der Regularisierung ist und der aktuelle Punkt ein Punkt vor der Regularisierung ist;
   - Konstruieren eines Strahls, der von einem Ursprung ausgeht, basierend auf einem Azimutwinkel und einem Nickwinkel des benachbarten Punktes;
   - Konstruieren einer Ebene basierend auf dem aktuellen Punkt und seiner Normalen;
   - Erlangen eines Schnittpunkts des Strahls und der Ebene und Bestimmen eines Abstands zwischen dem Ursprung und dem Schnittpunkt; und
   - Verwenden des bestimmten Abstands als die radiale Koordinate.

2. Verfahren zur Codierung der Geometrie einer Punktwolke nach Anspruch 1, wobei das Bestimmen des Vorhersagemodus für jeden Punkt in der regularisierten Struktur und das Durchführen einer geometrischen Vorhersage für jeden Punkt unter Verwendung des gewählten Vorhersagemodus, um zu codierende Informationen zu erhalten, umfasst:

   Aufbauen einer Vorhersagebaumstruktur basierend auf LiDAR-Kalibrierungsinformationen;
   Auswählen eines Vorhersagemodus für jeden Punkt gemäß der Vorhersagebaumstruktur;
   Durchführen einer geometrischen Vorhersage für jeden Punkt in der Vorhersagebaumstruktur gemäß dem ausgewählten Vorhersagemodus, um ein geometrisches Vorhersageresiduum jedes Punkts zu erhalten; und
   Verwenden des geometrischen Vorhersageresiduums als Teil der zu codierenden Informationen.

3. Verfahren zur Codierung der Geometrie einer Punktwolke nach Anspruch 2, wobei das Durchführen einer geometrischen Vorhersage für jeden Punkt in der Vorhersagebaumstruktur gemäß dem ausgewählten Vorhersagemodus, um ein geometrisches Vorhersageresiduum jedes Punkts zu erhalten, umfasst:

Vorhersagen von Zylinderkoordinaten $(r,j,i)$ eines aktuellen Knotens gemäß einem Typ des aktuellen Knotens und dem ausgewählten Vorhersagemodus, um einen Vorhersagewert $(r',j',i')$ und ein Vorhersageresiduum $(r_r r_j, r_i)$ des aktuellen Knotens in einem Zylinderkoordinatensystem zu erhalten, wobei ein Vorhersagewert $j'$ eines Azimutwinkels des aktuellen Knotens gemäß der folgenden Formel berechnet wird:

$$j' = j_{prev} + n,$$

wobei

$j_{prev}$ einen vorhergesagten Azimutwinkel des aktuellen Punkts repräsentiert; $n$ eine Anzahl von Punkten repräsentiert, die zwischen einem übergeordneten Knoten und dem aktuellen Knoten gemäß einer Abtastgeschwindigkeit übersprungen werden müssen, das Vorhersageresiduum $\hat{n}$ gleich $\hat{n} = n - n'$ ist, und $n'$ eine Anzahl von Punkten repräsentiert, die von codierten Knoten, die an den aktuellen Knoten angrenzen, übersprungen werden müssen; und

Durchführen einer Differenzvorhersage gemäß kartesischen Koordinaten $(x,y,z)$ und vorhergesagten kartesischen Koordinaten $(\hat{x},\hat{y},\hat{z})$ des aktuellen Knotens, um ein Vorhersageresiduum $(r_x, r_y, r_z)$ in einem kartesischen Koordinatensystem zu erhalten, wobei die vorhergesagten kartesischen Koordinaten $(\hat{x},\hat{y},\hat{z})$ durch inverse Umwandlung von Zylinderkoordinaten $(r,j,i)$ des Punkts erhalten werden.

4. Vorrichtung zur Codierung der Geometrie einer Punktwolke, umfassend:

ein erstes Datenerfassungsmodul (11), das konfiguriert ist, um ursprüngliche Punktwolkendaten zu erfassen, die durch ein LiDAR-Gerät erhalten wurden, welches aus einer Vielzahl von Laserscannern mit unterschiedlichen Nickwinkeln $\theta_i$ in der vertikalen Richtung und einer Rotationsabtastrate besteht;
ein Regularisierungsmodul (12), das konfiguriert ist, um eine Regularisierungs-Vorverarbeitung an den ursprünglichen Punktwolkendaten durchzuführen, um eine regularisierte Struktur zu erhalten;
ein erstes Vorhersagemodul (13), das dazu konfiguriert ist, einen Vorhersagemodus für jeden Punkt in der regularisierten Struktur zu bestimmen und eine geometrische Vorhersage an jedem Punkt unter Verwendung des ausgewählten Vorhersagemodus durchzuführen, um zu kodierende Informationen zu erhalten; und
ein Kodierungsmodul (14), das dazu konfiguriert ist, die zu kodierenden Informationen sequenziell zu kodieren, um einen geometrischen Informationsbitstrom zu erhalten; wobei das Regularisierungsmodul (12) dazu konfiguriert ist
(S1) eine Koordinatentransformation an den ursprünglichen Punktwolkendaten durchzuführen, um eine Darstellung der ursprünglichen Punktwolke in einem zylindrischen Koordinatensystem zu erhalten;
(S2) das zylindrische Koordinatensystem zu entfalten, um eine zweidimensionale Struktur zu erhalten, die aus Punkten der ursprünglichen Punktwolke besteht, und für jeden Punkt nach der Regularisierung einen Nickwinkel $\theta$ und einen Azimutwinkel $\varphi$ basierend auf einem vertikalen Erfassungsbereich jedes Laserscanners der LIDAR-Vorrichtung bzw. einem Abtastintervall $\varphi_{sample}$ der LIDAR-Vorrichtung zu bestimmen, wobei die zweidimensionale Struktur eine vertikale Auflösung aufweist, die durch die Laserscannernummer der LIDAR-Vorrichtung gegeben ist, und eine horizontale Auflösung, die durch $360/\varphi_{sample}$ gegeben ist; und
(S3) eine Regularisierungsvorverarbeitung an der zweidimensionalen Struktur durchzuführen, indem für jeden Punkt nach der Regularisierung eine radiale Koordinate basierend auf einem Punkt-zu-Ebene-Geometrieverzerrungsmaß bestimmt wird, wobei das Punkt-zu-Ebene-Geometrieverzerrungsmaß umfasst:

- Identifizieren eines benachbarten Punktes eines aktuellen Punktes in Richtungen eines Azimutwinkels und eines Nickwinkels, wobei der benachbarte Punkt ein Punkt nach der Regularisierung ist und der aktuelle Punkt ein Punkt vor der Regularisierung ist;
- Konstruieren eines Strahls, der von einem Ursprung ausgeht, basierend auf einem Azimutwinkel und einem Nickwinkel des benachbarten Punktes;
- Konstruieren einer Ebene basierend auf dem aktuellen Punkt und seiner Normalen;
- Erhalten eines Schnittpunkts des Strahls und der Ebene, und Bestimmen eines Abstands zwischen dem Ursprung und dem Schnittpunkt; und
- Verwenden des bestimmten Abstands als die radiale Koordinate.

**5.** Vorrichtung zur Punktwolkengeometriekodierung nach Anspruch 4, wobei das erste Vorhersagemodul (13) dazu konfiguriert ist:

> eine Vorhersagebaumstruktur basierend auf LIDAR-Kalibrierungsinformationen zu erstellen;
> einen Vorhersagemodus für jeden Punkt gemäß der Vorhersagebaumstruktur auszuwählen;
> eine geometrische Vorhersage an jedem Punkt in der Vorhersagebaumstruktur gemäß dem ausgewählten Vorhersagemodus durchzuführen, um ein geometrisches Vorhersageresiduum jedes Punktes zu erhalten; und
> das geometrische Vorhersageresiduum als Teil der zu kodierenden Informationen zu verwenden.

**6.** Vorrichtung zur Codierung der Punktwolkengeometrie nach Anspruch 5, wobei das erste Vorhersagemodul (13) dazu konfiguriert ist:
zylindrische Koordinaten ($r,j,i$) eines aktuellen Knotens gemäß einem Typ des aktuellen Knotens und dem ausgewählten Vorhersagemodus vorherzusagen, um einen vorhergesagten Wert ($r',j',i'$) und ein vorhergesagtes Residuum ($r_r,r_j,r_i$) des aktuellen Knotens in einem zylindrischen Koordinatensystem zu erhalten, wobei ein vorhergesagter Wert $j'$ eines Azimutwinkels des aktuellen Knotens gemäß der folgenden Formel berechnet wird:

$$j' = j_{prev} + n,$$

wobei

> $j_{prev}$ einen vorhergesagten Azimutwinkel des aktuellen Punktes darstellt; $n$ eine Anzahl von Punkten darstellt, die gemäß einer Scangeschwindigkeit zwischen einem übergeordneten Knoten und dem aktuellen Knoten übersprungen werden müssen, das vorhergesagte Residuum $\hat{n}$ ist $\hat{n} = n - n'$, und $n'$ eine Anzahl von Punkten darstellt, die von codierten, an den aktuellen Knoten angrenzenden Knoten übersprungen werden müssen; und
> eine Differenzvorhersage gemäß kartesischen Koordinaten ($x,y,z$) und vorhergesagten kartesischen Koordinaten ($\hat{x},\hat{y},\hat{z}$) des aktuellen Knotens durchzuführen, um ein vorhergesagtes Residuum ($r_x,r_y,r_z$) in einem kartesischen Koordinatensystem zu erhalten, wobei die vorhergesagten kartesischen Koordinaten ($\hat{x},\hat{y},\hat{z}$) durch inverse Umwandlung von zylindrischen Koordinaten ($r,j,i$) des Punktes erhalten werden.

**Revendications**

**1.** Un procédé de codage géométrique de nuage de points, comprenant :

> l'obtention de données de nuage de points originales obtenues par l'intermédiaire d'un dispositif LIDAR constitué d'une pluralité de scanners laser présentant des angles de tangage $\theta_i$ différents dans la direction verticale et un taux d'échantillonnage par rotation ;
> l'exécution d'un prétraitement de régularisation sur les données de nuage de points originales pour obtenir une structure régularisée ;
> la détermination d'un mode de prédiction pour chaque point dans la structure régularisée, et l'exécution d'une prédiction géométrique sur chaque point en utilisant le mode de prédiction sélectionné pour obtenir des informations à coder ; et
> le codage séquentiel des informations à coder pour obtenir un train de bits d'informations géométriques ; dans lequel le prétraitement de régularisation comprend :
>
>> l'exécution (S1) d'une conversion de coordonnées sur les données de nuage de points originales pour obtenir une représentation du nuage de points original dans un système de coordonnées cylindriques ;
>> le dépliage (S2) du système de coordonnées cylindriques pour obtenir une structure bidimensionnelle constituée de points du nuage de points original et la détermination, pour chaque point après régularisation, d'un angle de tangage $\theta$ et d'un angle d'azimut $\varphi$ basés sur une plage de collecte verticale de chaque scanner laser du dispositif LIDAR et un intervalle d'échantillonnage $\varphi_{sample}$ du dispositif LIDAR, respectivement, dans lequel la structure bidimensionnelle présente une résolution verticale donnée par le nombre de scanners laser du dispositif LIDAR et une résolution horizontale donnée par $360/\varphi_{sample}$ ; et
>> l'exécution (S3) d'un prétraitement de régularisation sur la structure bidimensionnelle sur la base d'une mesure de distorsion géométrique pour obtenir la structure régularisée en déterminant, pour chaque point après régularisation, une coordonnée radiale basée sur une mesure de distorsion géométrique point-à-plan, la mesure de distorsion géométrique point-à-plan comprenant :

- l'identification d'un point voisin d'un point actuel dans les directions d'un angle d'azimut et d'un angle de tangage, dans lequel le point voisin est un point après régularisation et le point actuel est un point avant régularisation ;
- la construction d'un rayon émis depuis une origine sur la base d'un angle d'azimut et d'un angle de tangage du point voisin ;
- la construction d'un plan sur la base du point actuel et de sa normale ;
- l'obtention d'une intersection du rayon et du plan, et la détermination d'une distance entre l'origine et l'intersection ; et
- l'utilisation de la distance déterminée comme coordonnée radiale.

2. Procédé de codage de géométrie de nuage de points selon la revendication 1, dans lequel la détermination du mode de prédiction pour chaque point dans la structure régularisée, et l'exécution d'une prédiction géométrique sur chaque point en utilisant le mode de prédiction sélectionné pour obtenir des informations à coder comprend :

l'établissement d'une structure d'arbre de prédiction basée sur des informations de calibration lidar ;
la sélection d'un mode de prédiction pour chaque point selon la structure d'arbre de prédiction ;
l'exécution d'une prédiction géométrique sur chaque point dans la structure d'arbre de prédiction selon le mode de prédiction sélectionné, pour obtenir un résidu prédit géométrique de chaque point ; et
l'utilisation du résidu prédit géométrique en tant que partie des informations à coder.

3. Procédé de codage de géométrie de nuage de points selon la revendication 2, dans lequel l'exécution d'une prédiction géométrique sur chaque point dans la structure d'arbre de prédiction selon le mode de prédiction sélectionné, pour obtenir un résidu prédit géométrique de chaque point comprend :
la prédiction des coordonnées cylindriques $(r,j,i)$ d'un nœud actuel selon un type du nœud actuel et le mode de prédiction sélectionné, pour obtenir une valeur prédite $(r',j',i')$ et un résidu prédit $(r_r,r_j,r_i)$ du nœud actuel dans un système de coordonnées cylindriques, dans lequel une valeur prédite $j'$ d'un angle d'azimut du nœud actuel est calculée selon la formule suivante :

$$j' = j_{prev} + n,$$

dans laquelle

$j_{prev}$ représente un angle d'azimut prédit du point actuel ; $n$ représente une quantité de points qui doivent être sautés entre un nœud parent et le nœud actuel selon une vitesse de balayage, le résidu prédit $\hat{n}$ est $\hat{n} = n - n'$, et $n'$ représente une quantité de points qui doivent être sautés par des nœuds codés adjacents au nœud actuel ; et l'exécution d'une prédiction de différence selon des coordonnées cartésiennes $(x,y,z)$ et des coordonnées cartésiennes prédites $(\hat{x},\hat{y},\hat{z})$ du nœud actuel pour obtenir un résidu prédit $(r_x,r_y,r_z)$ dans un système de coordonnées cartésiennes, dans lequel les coordonnées cartésiennes prédites $(\hat{x},\hat{y},\hat{z})$ sont obtenues par conversion inverse des coordonnées cylindriques $(r,j,i)$ du point.

4. Appareil de codage de géométrie de nuage de points, comprenant :

un premier module d'obtention de données (11), configuré pour obtenir des données de nuage de points originales obtenues via un dispositif LIDAR composé d'une pluralité de scanners laser avec différents angles de pas $\theta_i$ dans la direction verticale et un taux d'échantillonnage de rotation ;
un module de régularisation (12), configuré pour effectuer un prétraitement de régularisation sur les données de nuage de points originales pour obtenir une structure régularisée ;
un premier module de prédiction (13), configuré pour déterminer un mode de prédiction pour chaque point dans la structure régularisée, et pour effectuer une prédiction géométrique sur chaque point en utilisant le mode de prédiction sélectionné afin d'obtenir des informations à coder ; et
un module de codage (14), configuré pour coder séquentiellement les informations à coder afin d'obtenir un train de bits d'informations géométriques ; dans lequel le module de régularisation (12) est configuré pour effectuer (S1) une conversion de coordonnées sur les données de nuage de points originales pour obtenir une représentation du nuage de points original dans un système de coordonnées cylindriques ;
déplier (S2) le système de coordonnées cylindriques pour obtenir une structure bidimensionnelle constituée de points du nuage de points original et déterminer, pour chaque point après régularisation, un angle d'inclinaison $\theta$ et un angle azimutal $\varphi$ sur la base d'une plage de collecte verticale de chaque scanner laser du dispositif LIDAR et d'un intervalle d'échantillonnage $\varphi_{sample}$ du dispositif LIDAR, respectivement, dans laquelle la structure bidimensionnelle a une résolution verticale donnée par le nombre de scanners laser du dispositif LIDAR et une résolution horizontale donnée par $360/\varphi_{sample}$ ; et

effectuer (S3) un prétraitement de régularisation sur la structure bidimensionnelle en déterminant, pour chaque point après régularisation, une coordonnée radiale basée sur une mesure de distorsion géométrique point-à-plan, la mesure de distorsion géométrique point-à-plan comprenant :

- identifier un point voisin d'un point actuel dans des directions d'un angle azimutal et d'un angle d'inclinaison, dans lequel le point voisin est un point après régularisation et le point actuel est un point avant régularisation ;
- construire un rayon émis depuis une origine sur la base d'un angle azimutal et d'un angle d'inclinaison du point voisin ;
- construire un plan sur la base du point actuel et de sa normale ;
- obtenir une intersection du rayon et du plan, et déterminer une distance entre l'origine et l'intersection ; et
- utiliser la distance déterminée comme coordonnée radiale.

5. L'appareil de codage géométrique de nuage de points selon la revendication 4, dans lequel le premier module de prédiction (13) est configuré pour :

établir une structure d'arbre de prédiction sur la base d'informations de calibration lidar ;
sélectionner un mode de prédiction pour chaque point selon la structure d'arbre de prédiction ;
effectuer une prédiction géométrique sur chaque point dans la structure d'arbre de prédiction selon le mode de prédiction sélectionné, pour obtenir un résidu géométrique prédit de chaque point ; et
utiliser le résidu géométrique prédit comme faisant partie des informations à coder.

6. L'appareil de codage de géométrie de nuage de points selon la revendication 5, dans lequel le premier module de prédiction (13) est configuré pour :
prédire les coordonnées cylindriques $(r,j,i)$ d'un nœud actuel selon un type du nœud actuel et le mode de prédiction sélectionné, pour obtenir une valeur prédite $(r',j',i')$ et un résidu prédit $(r_r,r_j,r_i)$ du nœud actuel dans un système de coordonnées cylindriques, dans lequel une valeur prédite $j'$ d'un angle azimutal du nœud actuel est calculée selon la formule suivante :

$$ j' = j_{prev} + n, $$

dans lequel

$j_{prev}$ représente un angle azimutal prédit du point actuel ; $n$ représente une quantité de points qui doivent être sautés entre un nœud parent et le nœud actuel selon une vitesse de balayage, le résidu prédit $\hat{n}$ est $\hat{n} = n - n'$, et $n'$ représente une quantité de points qui doivent être sautés par des nœuds codés adjacents au nœud actuel ; et
effectuer une prédiction de différence selon des coordonnées cartésiennes $(x,y,z)$ et des coordonnées cartésiennes prédites $(\hat{x},\hat{y},\hat{z})$ du nœud actuel pour obtenir un résidu prédit $(r_x,r_y,r_z)$ dans un système de coordonnées cartésiennes, dans lequel les coordonnées cartésiennes prédites $(\hat{x},\hat{y},\hat{z})$ sont obtenues par conversion inverse de coordonnées cylindriques $(r,j,i)$ du point.

| Perform coordinate conversion on original point cloud data to obtain a representation of an original point cloud in a cylindrical coordinate system | S1 |

| Unfold the cylindrical coordinate system to obtain a two-dimensional structure | S2 |

| Perform regularization processing on the two-dimensional structure based on a geometric distortion measure to obtain a regularized structure | S3 |

FIG. 1

FIG. 2

FIG. 3

FIG. 4

FIG. 5

FIG. 6

```
┌─────────────────────────────────────────────────────────────────┐
│              Obtain original point cloud data                     │⌇∧ Step 1
└─────────────────────────────────────────────────────────────────┘
                                    │
                                    ▼
┌─────────────────────────────────────────────────────────────────┐
│ Perform regularization preprocessing on the original point cloud  │
│      data to obtain a regularized structure                       │⌇∧ Step 2
└─────────────────────────────────────────────────────────────────┘
                                    │
                                    ▼
┌─────────────────────────────────────────────────────────────────┐
│ Determine a prediction mode for each point in the regularized     │
│ structure, and perform geometric prediction on the point by using │⌇∧ Step 3
│ the selected prediction mode to obtain to-be-coded information    │
└─────────────────────────────────────────────────────────────────┘
                                    │
                                    ▼
┌─────────────────────────────────────────────────────────────────┐
│ Sequentially code the to-be-coded information to obtain a         │
│ geometric information bitstream                                    │⌇∧ Step 4
└─────────────────────────────────────────────────────────────────┘
```

FIG. 7

```
┌──────────────────────┐
│  First data obtaining │
│       module          │⟋ 11
└──────────────────────┘
            │
            ▼
┌──────────────────────┐
│    Regularization     │
│       module          │⟋ 12
└──────────────────────┘
            │
            ▼
┌──────────────────────┐
│    First prediction   │
│       module          │⟋ 13
└──────────────────────┘
            │
            ▼
┌──────────────────────┐
│    Coding module      │⟋ 14
└──────────────────────┘
```

FIG. 8

| Obtain a geometric information bitstream and decode the geometric information bitstream to obtain decoded data, where the decoded data includes a prediction mode for a current node | Step 1 |

| Perform geometric prediction on the current node according to the prediction mode to obtain predicted residuals, where the predicted residuals include a predicted residual in a cylindrical coordinate system and a predicted residual in a Cartesian coordinate system | Step 2 |

| Reconstruct a prediction tree structure according to the predicted residual in the cylindrical coordinate system, and perform coordinate conversion on points in the prediction tree structure to obtain predicted Cartesian coordinates of the current point | Step 3 |

| Reconstruct a point cloud according to the predicted residual in the Cartesian coordinate system and the predicted Cartesian coordinates to obtain reconstructed point cloud data | Step 4 |

FIG. 9

| Second data obtaining module | 21 |

| Second prediction module | 22 |

| Prediction tree reconstruction module | 23 |

| Point cloud reconstruction module | 24 |

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HYUN-MOOK OH et al.** G-PCC] [new proposal] Coordinate conversion for attribute coding of cat3-frame data. *MPEG meeting; 20200420 - 20200424, Alpbach, (Motion Picture Expert Group or ISO/IEC JTC1/SC29/WG11)*, 15 April 2020, vol. 130
- **KHALED MAMMOU et al.** G-PCC][New proposal] Optimization of the predictive coding scheme for Spinning Lidars. *MPEG meeting; 20200420 - 20200424, Alpbach, (Motion Picture Expert Group or ISO/IEC JTC1/SC29/WG11)*, 15 April 2020, vol. 130

- **DAVID FLYNN et al.** G-PCC][New proposal] Predictive Geometry Coding. *MPEG meeting; 20191007 - 20191011, Geneva, (Motion Picture Expert Group or ISO/IEC JTC1/SC29/WG11)*, 06 October 2019, vol. 128
- G-PCC codec description. *MPEG MEETING; 20200629 - 20200703; ONLINE; (MOTION PICTURE EXPERT GROUP OR ISO/IEC JTC1/SC29/WG11)*, 10 October 2020, vol. 131 (n19525)